# EUROPÄISCHE PATENTSCHRIFT

(11) **EP 1 191 246 B1**
(45) Veröffentlichungstag und Bekanntmachung des Hinweises auf die Patenterteilung: **17.11.2004**
(21) Anmeldenummer: 01118335.7
(22) Anmeldetag: 27.07.2001
(51) Int. Cl.: F16F 1/04

(54) **Schraubenfeder**
Coil spring
Ressort hélicoidal

(30) Priorität: 21.09.2000 DE 10047104; 05.05.2001 DE 20107669 U
(43) Veröffentlichungstag der Anmeldung: 27.03.2002
(73) Patentinhaber: Federntechnik Knörzer GmbH, 72793 Pfullingen (DE)
(72) Erfinder: Knörzer, Thomas, 72805 Lichtenstein (DE)
(74) Vertreter: Ott, Elmar ,Dipl.-Ing.

(56) Entgegenhaltungen:
- EP-A- 0 313 324
- DE-C- 606 718
- GB-A- 2 260 385
- US-A- 2 998 242
- US-A- 4 735 403
- PATENT ABSTRACTS OF JAPAN vol. 011, no. 191 (M-600), 19. Juni 1987 (1987-06-19) & JP 62 017436 A (HORIKIRI BANE SEISAKUSHO:KK), 26. Januar 1987 (1987-01-26)
- PATENT ABSTRACTS OF JAPAN vol. 010, no. 375 (M-545), 13. Dezember 1986 (1986-12-13) & JP 61 167727 A (MURATA HATSUJO KK), 29. Juli 1986 (1986-07-29)

## Beschreibung

Die Erfindung betrifft eine als Zugfeder ausgebildete Schraubenfeder mit einem Federkörper aus schraubenförmig gewickeltem Federdraht gemäß Oberbegriff des Anspruchs 1.

Schraubenfedern aus Federstahl werden für die unterschiedlichsten Anwendungen eingesetzt. Dabei werden Zugfedern meist in der Weise angeordnet, dass sie zwischen zwei Spannungswerten Wechsellasten ausgesetzt sind, d. h. dass auf die beiden an den Enden des Federkörpers abstehenden Ösen ständig eine Zugkraft mit vorzugsweise unterschiedlicher Stärke angreift. Der in etwa rechtwinklig abgebogene Übergangsbereich zwischen Öse und der ersten bzw. letzten Windung des Federkörpers ist dabei einer hohen Beanspruchung ausgesetzt, weshalb bei herkömmlichen Schraubenfedern regelmäßig dieser Übergangsbereich aufgrund von Materialermüdung oder Überbelastung zuerst bricht.

Die JP(A) 620 174 36 zeigt eine Druckfeder aus einem Federdraht mit elliptischem Querschnitt, wobei das Querschnittsachsenverhältnis ca. 1,95 beträgt.

Aus der US-A 2 998 242 ist eine weitere Druckfeder mit eiförmigem Drahtquerschnitt bekannt, der für Zugfedern nicht geeignet erscheint.

Die Patentschrift DE-C-606 718 zeigt die Merkmale des Oberbegriffs von Anspruch 1.

Der Erfindung liegt die Aufgabe zugrunde, eine als Zugfeder ausgebildete Schraubenfeder aus schraubenförmig gewickeltem Federdraht zu schaffen, die bei möglichst geringem Materialbedarf eine hohe Belastbarkeit besitzt.

Die Lösung dieser Aufgabe erhält man durch die im Anspruch 1 angegebenen Merkmale. Es wird vorteilhafterweise ein ovaler Querschnitt für den Federdraht verwendet, wobei der Federdraht über den gesamten Federkern und auch im Bereich der Öse bei Zugfedern über seine große Querschnittsachse a gewickelt ist. Somit liegen die Windungen mit ihren breiteren Seiten aneinander, während an der halbkreisförmig ausgebildeten und in Längsrichtung des Federkörpers abstehenden Öse einer Zugfeder die kurze Querschnittsachse b senkrecht zur Längsachse der Schraubenfeder ausgerichtet ist. Am Federkörper verläuft die große Querschnittsachse a quer bzw. weitgehend senkrecht zur Längsachse der Schraubenfeder. Aufgrund der Steigung der Windungen weicht die große Querschnittsachse a im Bereich des Federkörpers geringfügig vom rechten Winkel im Bezug auf die Längsachse des Federkörpers ab.

Untersuchungen haben gezeigt, dass ein ovaler Querschnitt, bei dem das Achsenverhältnis von großer Querschnittsachse a zur kleinen Querschnittsachse b im Verhältnis von a:b = 1,54 ausgebildet ist, einen optimalen Kompromiss darstellt, bei dem die Belastbarkeit und die Federeigenschaften in idealer Weise aufeinander abgestimmt sind.

Um eine Zugfeder, bei der ein elliptischer oder ovaler Federdraht Verwendung findet, mit einer maximalen Stabilität im Bereich der Öse auszubilden, kann das Achsenverhältnis von a:b = 1,38 betragen an der Öse.

Aus Gründen einer möglichst einfachen Herstellung ist die Schraubenfeder vorzugsweise aus einem Federdraht gefertigt, dessen Querschnitt über seine gesamte Länge konstant ist. Grundsätzlich besteht aber auch die Möglichkeit, den Federdraht im Bereich des Federkörpers mit einem größeren oder kleineren Achsenverhältnis a:b auszubilden, als im Bereich einer angeformten Öse. Der Federdraht wird vorzugsweise aus einem Draht mit rundem Querschnitt zu einem Federdraht mit elliptischem oder ovalem Querschnitt verformt. Die Verformung kann durch Walzen oder im Drahtziehverfahren erfolgen.

Die Erfindung wird nachfolgend anhand von in der Zeichnung dargestellten Ausführungsbeispielen näher erläutert.

Es zeigen:
Figur 1 eine mit einer Zugkraft beanspruchte Schraubenfeder,
Figur 2 eine gegenüber der Darstellung von Figur 1 um 90° gedrehte Ansicht einer Schraubenfeder mit im Schnitt dargestelltem Federkörper,
Figur 3 eine elliptische Querschnittsfläche des für eine erfindungsgemäße Schraubenfeder vorgesehenen Federdrahts,
Figur 4 eine ovale Querschnittsfläche des Federdrahts einer erfindungsgemäßen Schraubenfeder und
Figur 5 eine Schraubenfeder mit oval geformten Federdraht..

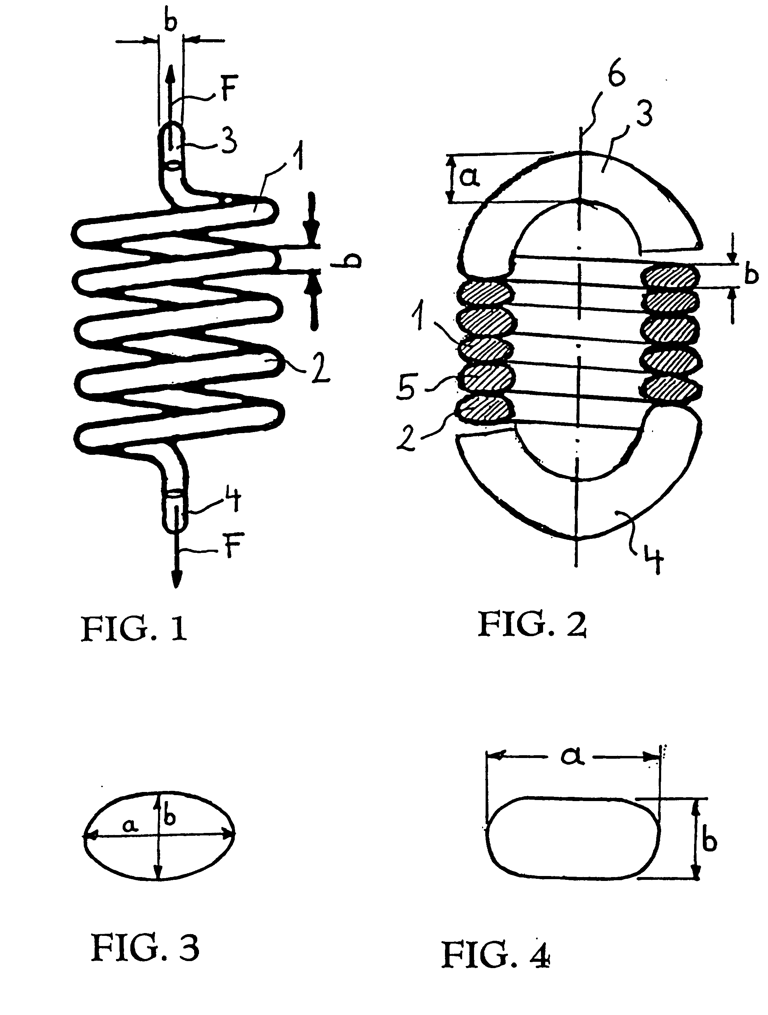

Die in Figur 1 dargestellte Schraubenfeder 1 hat einen Federkörper aus schraubenförmig gewickeltem Federdraht 2, der an seinen beiden Enden in angeformte Ösen 3, 4 übergeht. Es handelt sich somit hier um eine Zugfeder.

Die Ösen 3, 4 sind senkrecht zur Zeichnungsebene ausgerichtet und bilden einen in etwa halbkreisförmigen Ringbogen. Der verwendete Federdraht 2 hat über seine gesamte Länge einen einheitlichen, elliptischen Querschnitt, wie er in Figur 3 dargestellt ist. Die kleine Achse b der elliptischen Querschnittsfläche ist im Bereich des Federkörpers in Längsrichtung der Schraubenfeder 1 ausgerichtet, während sie im Bereich der Ösen 3, 4 senkrecht zur Längsachse der Schraubenfeder 1 verläuft.

Bei der in Figur 2 dargestellten Ansicht einer Schraubenfeder 1 ist der Federkörper im Längsschnitt dargestellt, so dass die elliptische Querschnittsfläche 5 des Federdrahts 2 erkennbar ist. Die beiden Ösen 3, 4 sind ebenso wie die Windungen im Bereich des Federkörpers hochkant gebogen bzw. gewickelt, so dass die große Querschnittsachse a am Scheitelpunkt der Ösen 3, 4 koaxial zur Längsachse 6 der Schraubenfeder 1 ausgerichtet ist.

In Figur 3 ist die elliptische Querschnittsfläche der Schraubenfeder 1 nochmals vergrößert dargestellt, wobei die große Querschnittsachse a und die kleine Querschnittsachse b eingetragen sind. Das dargestellte Achsenverhältnis von a:b beträgt hier etwa 1,65. Die bevorzugten Wertebereiche für das Achsenverhältnis a:b sind bereits oben dargelegt worden.

Wird die Schraubenfeder 1 aus einem Federdraht mit einem ovalen Querschnitt, wie er in Figur 4 dargestellt ist, hergestellt, so kann dafür bei gleichen Anwendungsvoraussetzungen ein geringfügig größeres Achsenverhältnis a:b gewählt werden.

Untersuchungen haben gezeigt, dass mit einem Federdraht, der einen ovalen Querschnitt hat, Schraubenfedem realisierbar sind, die mit verhältnismäßig geringem Materialaufwand hohen Belastungen standhalten. Durch den elliptisch oder oval "gedrückten" Drahtquerschnitt kann die Stabilität im Bereich der Ösen bei Zugfedern deutlich verbessert werden. Bezüglich der Belastbarkeit lassen sich somit der Ösenbereich und der Federkörper optimal aneinander anpassen.

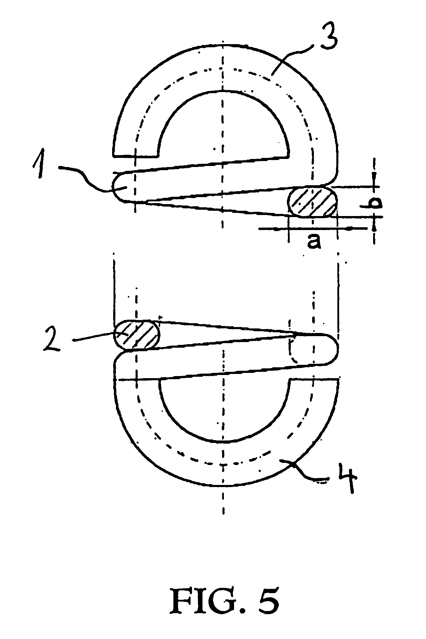

Ein durchgeführter Belastungsversuch mit einer Schraubenfeder gemäß Figur 5 hat folgendes gezeigt:

Als Profil für den Federdraht wurde ein ovaler Querschnitt mit b x a = 1,80 x 2,77 gewählt, was dem bevorzugten Verhältnis von 1,54 entspricht. Dabei wurde festgestellt, dass die Federkraft gegenüber einem vergleichbaren herkömmlichen Runddraht mit d=1,80 um den Faktor 3,03 höher ist, die vergleichbare Spannung sich im Draht aber nur um den Faktor 1,44 im Federkörper erhöht.

Das Widerstandsmoment entspricht einem Runddraht von 1,30-facher Dicke. Daraus resultiert, dass bei vorgegebenem Außendurchmesser und Federkörper mit gleicher Blocklänge mindestens 30 % mehr Kraft oder 30 % mehr Federweg (bei gleicher Kraft) gewonnen wird, wenn statt eines herkömmlichen Runddrahtes ein Ovaldraht mit dem Verhältnis a:b= 1,54 gewählt wird. Das gilt für den Federkörper selbst, unabhängig davon, ob es sich um eine Zug- oder Druckfeder handelt.

## Patentansprüche

1. Als Zugfeder ausgebildete Schraubenfeder mit einem Federkörper aus schraubenförmig gewickeltem Federdraht (2) und mit wenigstens einer an einem Ende des Federkörpers angeformten, in Längsrichtung des Federkörpers abstehenden Öse (3, 4), **dadurch gekennzeichnet, dass** der Federdraht (2) einen ovalen oder elliptischen Querschnitt (5) hat und über seine große Querschnittsachse (a) so gewickelt ist, dass die große Querschnittsachse (a) des Federdrahts (2) im Bereich des Federkörpers im entspannten Zustand quer bzw. annähernd senkrecht zur Längsachse (6) des Federkörpers verläuft, wobei bei einem aus Metall bestehenden Federdraht (2) mit über den Federkörper konstantem Achsenverhältnis von großer Querschnittsachse (a) zur kleinen Querschnittsachse (b), das Achsenverhältnis a:b im Bereich zwischen 1,5 und 1,65 liegt und vorzugsweise 1,54 beträgt, wobei
a die Länge der großen Querschnittsachse und
b die Länge der kleinen Querschnittsachse des Federdrahts (2) ist,
und dass die beiden Ösen (3, 4) ebenso wie die Windungen im Bereich des Federkörpers hochkant gebogen bzw. gewickelt sind, so dass die große Querschnittsachse a am Scheitelpunkt der Ösen (3, 4) koaxial zur Längsachse (6) der Schraubenfeder (1) ausgerichtet ist.

2. Schraubenfeder nach Anspruch 1, **dadurch gekennzeichnet, dass** zur Erreichung einer ausreichenden Stabilität im Bereich ihrer Öse (3, 4) die große Querschnittsachse (a) zur kleinen Querschnittsachse (b) an der Öse ein Verhältnis von a:b = 1,38 haben.

3. Schraubenfeder nach einem der vorhergehenden Ansprüche, **dadurch gekennzeichnet, dass** die kleine Querschnittsachse (b) eine Länge hat, die je nach erforderlicher Schraubenstärke im Bereich von 0,2 mm bis 15 mm liegt.

4. Schraubenfeder nach einem der vorhergehenden Ansprüche, **dadurch gekennzeichnet, dass** der Federdraht (2) aus einem Runddraht zu einem Federdraht mit elliptischem oder ovalem Querschnitt durch Verformung hergestellt ist.

5. Schraubenfeder nach einem der vorhergehenden Ansprüche, **dadurch gekennzeichnet, dass** der Federdraht (2) aus einem Runddraht im Drahtziehverfahren zu einem Federdraht mit elliptischem oder ovalem Querschnitt verformt ist.

## Claims

1. Coil spring, which is in the form of a tension spring, having a spring body formed from helically wound spring wire (2) and having at least one lug (3, 4) which is provided on one end of the spring body and protrudes In the longitudinal direction of the spring body, **characterised in that** the spring wire (2) has an oval or elliptical cross-section (5) and is so wound over its large cross-sectional axis (a) that the large cross-sectional axis (a) of the spring wire (2) extends in the region of the spring body in a non-tensioned state transversely or respectively approximately perpendicularly relative to the longitudinal axis (6) of the spring body, the axial ratio a:b lying in the range of between 1.5 and 1.65 and preferably being 1.54, with a spring wire (2) which is formed from metal and has a constant axial ratio between the large cross-sectional axis (a) and the small cross-sectional axis (b) over the spring body,
a being the length of the large cross-sectional axis, and
b being the length of the small cross-sectional axis of the spring wire (2),
and **in that** the two lugs (3, 4) as well as the coils in the region of the spring body are bent on edge or respectively wound, so that the large cross-sectional axis (a) at the vertical point of the lugs (3, 4) is orientated coaxially relative to the longitudinal axis (6) of the coil spring (1).

2. Coil spring according to claim 1, **characterised in that**, in order to achieve an adequate stability in the region of its lug (3, 4), the large cross-sectional axis (a) relative to the small cross-sectional axis (b) at the lug has a ratio of a:b of 1.38.

3. Coil spring according to one of the preceding claims, **characterised in that** the small cross-sectional axis (b) has a length which lies in the range of between 0.2 mm and 15 mm, depending on the coil thickness required.

4. Coil spring according to one of the preceding claims, **characterised in that** the spring wire (2) is produced by deformation from a round wire to form a spring wire with an elliptical or oval cross-section.

5. Coil spring according to one of the preceding claims, **characterised in that** the spring wire (2) is deformed from a round wire by a wire-drawing method to form a spring wire with an ellipticat or oval cross-section.

## Revendications

1. Ressort hélicoïdal conçu comme ressort de traction, avec un corps de ressort en fil à ressort (2) enroulé en hélice et avec au moins un anneau (3, 4) formé à une extrémité du corps de ressort en saillie dans la direction longitudinale du corps de ressort, **caractérisé en ce que** le fil à ressort (2) possède une section ovale ou elliptique (5) et est enroulé sur son grand axe de section (a) de telle sorte que le grand axe de section (a) s'étend dans la région du corps de ressort, à l'état détendu, transversalement ou encore approximativement perpendiculairement à l'axe longitudinal (6) du corps de ressort, sachant que, pour un fil à ressort (2) en métal ayant un rapport constant sur le corps de ressort entre le grand axe de section (a) et le petit axe de section (b), le rapport des axes a:b est compris entre 1,5 et 1,65 et est de préférence égal à 1,54,
a étant la longueur du grand axe de section et
b étant la longueur du petit axe de section du fil à ressort (2),
et **en ce que** les deux anneaux (3, 4) de même que les spires dans la région du corps de ressort sont enroulés ou encore recourbés sur chant, de sorte que le grand axe de section (a) au sommet des anneaux (3, 4) est orienté coaxialement à l'axe longitudinal (6) du ressort hélicoïdal (1).

2. Ressort hélicoïdal selon la revendication 1, **caractérisé en ce que**, afin d'obtenir une stabilité suffisante dans la région de ses anneaux (3, 4), le grand axe de section (a) se trouve dans un rapport a:b = 1,38 avec le petit axe de section (b) au niveau de l'anneau.

3. Ressort hélicoïdal selon l'une des revendications précédentes, **caractérisé en ce que** le petit axe de section (b) possède une longueur qui, selon l'épaisseur d'hélice nécessaire, se situe dans la plage de 0,2 mm à 15 mm.

4. Ressort hélicoïdal selon l'une des revendications précédentes, **caractérisé en ce que** le fil à ressort (2) est réalisé sous la forme d'un fil à ressort de section elliptique ou ovale par déformation à partir d'un fil rond.

5. Ressort hélicoïdal selon l'une des revendications précédentes, **caractérisé en ce que** le fil à ressort (2) est réalisé sous la forme d'un fil à ressort de section elliptique ou ovale par tréfilage à partir d'un fil rond.
